(19) Europäisches Patentamt
European Patent Office
Office européen des brevets

(11) Numéro de publication : **0 511 132 A1**

(12) **DEMANDE DE BREVET EUROPEEN**

(21) Numéro de dépôt : **92420133.8**

(22) Date de dépôt : **22.04.92**

(51) Int. Cl.5 : **C08G 18/62,** B05D 7/16, C09D 5/12, C09D 129/14, C09D 175/04

(30) Priorité : **22.04.91 FR 9105089**

(43) Date de publication de la demande : **28.10.92 Bulletin 92/44**

(84) Etats contractants désignés : **DE FR GB IT NL**

(71) Demandeur : **MAP AERO Sarl**
**Zone Industrielle**
**F-09100 Pamiers (FR)**

(72) Inventeur : **Brachotte, Jean-François**
**Rue Frédéric Mistral**
**F-09100 Saint-Jean du Falga (FR)**
Inventeur : **Malick-de Bon, Françoise**
**Bonrepeau - La Tour du Crieu**
**F-09100 Pamiers (FR)**
Inventeur : **Sanson, Jacques**
**96, Rue des Arbousiers**
**F-34000 Clapiers (FR)**
Inventeur : **Loiseau, Jöel**
**3 Rue Pierre Sémard**
**F-09100 Pamiers (FR)**

(54) **Composition d'une peinture polyuréthanne dite "couche barrière" pour réaliser un décapage sélectif et rapide.**

(57) L'invention concerne la composition d'une peinture dite couche barrière qui insérée dans un système multicouche joue le rôle de couche barrière qui à la fois accélère et stoppe à sa surface l'action d'un décapant chimique

La couche de finition polyuréthanne 4 repose sur la couche barrière 1 qui, elle-même, adhéré à un primaire polyuréthanne ou époxydique anticorrosion 3 (fig.2a)

Après décapage, la couche barrière 1 demeure et protège la couche primaire (fig.2b).
Elle est ainsi prête pour recevoir un nouveau revêtement polyuréthanne de finition sans avoir dégradé le traitement anticorrosion.

Le liant en principal ou secondaire de cette couche est constitué d'acétals ou butyrals polyvinyliques pouvant être réticulés ou préréticulés par un isocyanate, le taux de réticulation entre les hydroxyles de la base et les isocyanates est situé entre 5 et 150 % en mole.Cette peinture trouve application dans de nombreux domaines, et notamment dans les systèmes de peintures extérieures pour Aéronefs.

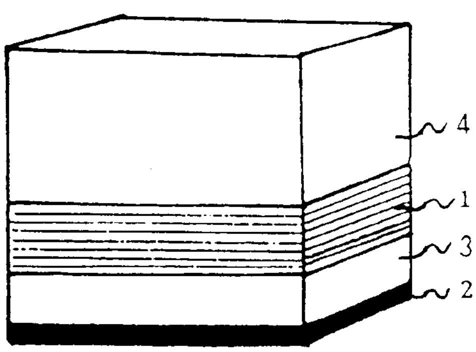


Fig. 2 a

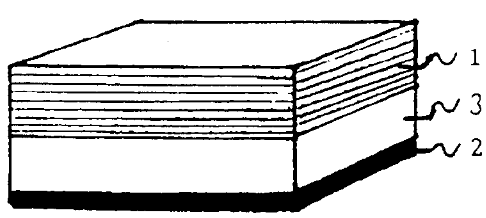


Fig. 2 b

EP 0 511 132 A1

Jouve, 18, rue Saint-Denis, 75001 PARIS

L'invention concerne la composition d'une peinture polyuréthanne dite couche barrière qui insérée dans un système multicouche joue le rôle de couche barrière qui à la fois accélère et stoppe à sa surface l'action d'un décapent chimique et permet un décapage rapide et sélectif à l'aide de décapants chimiques peu agressifs des couches déposées sur celle- ci. Cette peinture peut de plus jouer un rôle anticorrosif et/ou d'amélioration de l'état de surface (Primaire anticorrosion ou apprêt ponçable).

Le liant en principal ou secondaire de cette couche est constitué d'acétals ou butyrals polyvinyliques pouvant être réticulés ou préréticulés par un isocyanate, le taux de réticulation entre les hydroxyles de la base et les isocyanates est situé entre 5 et 150 % en mole. Cette peinture comporte une quantité de solvant se situant entre 0 et 90 % par rapport au poids total de la peinture et une quantité de pigment se situant entre 0 et 80 % par rapport au poids total de cette peinture. Ce système peut trouver des applications dans de nombreux domaines, et notamment dans les systèmes de peintures extérieures pour Aéronefs.

Actuellement, les Aéronefs sont protégés à l'aide de systèmes multicouches trés résistants chimiquement à base de résines époxydiques ou polyuréthannes.

Ces appareils doivent être fréquemment remis en peinture soit pour des raisons d'esthétique ou de changement de livrée. Il faut alors, entièrement décaper l'appareil à l'aide d'un décapant chimique par exemple à base de chlorure de méthylène et phénol, nocif et agressif qui fait cloquer la peinture, puis reconstituer le système de peinture initial. Cette opération est longue et délicate.

A ce jour, pour faciliter cette opération, des sociétés ont proposé de réaliser des "couches barrières" à l'aide de polymères du type polyamide monocomposant, qui insérées dans le système facilitent le décapage chimique comme décrit dans FR-A-2309616. Malheureusement ces peintures à base d'alcool, sont désagréables à appliquer, et ne sont donc pas utilisables à l'aide des pistolets électrostatiques couramment utilisés en Aéronautique.

De plus, l'extrait sec trés faible ne permet que difficilement d'appliquer en une seule fois plus de 15 micromètres, ce qui interdit la possibilité de réaliser des apprêts ou c'es primaires à partir de ces polymères. Plus ennuyeux encore, cette couche est attaquée à l'occasion du décapage chimique et il faut l'enlever aprés décapage à l'aide d'un solvant alcoolique.

Il est également décrit une autre composition de couche intermédiaire dans le document DE-A-2528943. Cette couche est composée d'une résine polyuréthanne élastique linéaire et non réticulée qui peut contenir jusqu'à 0,1% de groupements OH qui est séchée physiquement à l'air. Et seules les couches supérieures et inférieures sont des polyuréthannes réticulés à l'aide d'isocyanate. Cette couche supérieure est destinée à être éliminée à l'occasion du décapage. La couche intermédiaire n'étant pas réticulée présente l'inconvénient de ne pas résister aux fluides hydrauliques (phosphates d'ester) utilisés en aéronautique.

L'invention concerne l'utilisation d'un polymère à propriétés filmogènes, qui possède à la fois une forte résistance chimique (notamment aux fluides hydrauliques à base de phosphate d'ester) et une grande sensibilité au chlorure de méthylène contenu dans le décapent. Un tel polymère peut donc être utilisé comme liant pour réaliser des primaires, des apprêts ponçables, des couches intermédiaires, ou tout autre couche. Les Polymères, objet de l'invention sont des acétals polyvinyliques ou butyrals polyvinyliques pouvant être réticulés par des isocyanates selon la réaction générale;

PVA étant l'acétal ou le butyral polyvinylique, R étant une fonction carbonée:

$$(PVA)-OH + OCN-R-NCO + OH-(PVA)$$
$$\downarrow$$
$$(PVA)-O-C-N-R-N-C-O-(PVA)$$

Pour les acétals ou butyrals polyvinyliques on peut utiliser tous les types possédant des fonctions hydroxyles. On préfère cependant des grades facilement solubles dans des coupes de solvants exemptes d'alcools.

Pour les isocyanates on peut utiliser tous les types de résines d'uréthanne; on citera par exemple :

- Type biuret aliphatique
- Type à base toluène diisocyanate
- Type trimère ou isocyanurate

Le taux de réticulation des isocyanates par rapport aux fonctions hydroxyles peut varier de 5 % à 150 %. De plus, on peut ajouter à ce liant un deuxième liant qui peut améliorer les performances du polymère principal.

La peinture peut donc être mono ou bicomposant. Cette peinture contient des solvants tels que par exemple : hydrocarbures aromatiques ou aliphatiques, acétates, cétones ...

La peinture peut contenir tous les adjuvants désirés communément employés dans les formulations de peinture.

En ce qui concerne la pigmentation, celle-ci est adaptée selon les applications, leur quantité par rapport au liant peut varier de 0 à 400 %, on cite à titre d'exemple :

. Dans le cas d'un primaire anticorrosion = Chromate de zinc, de strontium, phosphate de zinc, talc, dioxyde de titane ...

. Dans le cas d'un apprêt : talc, oxyde de fer, dioxyde de titane ...

. Dans le cas d'une couche intermédiaire : dioxyde de titane, talc ....

Cette liste n'est pas limitative.

Ces peintures pourront être appliquées sur tous les substrats au pistolet, à la brosse ou toute autre technique y compris l'application électrostatique.

Le mélange base + durcisseur peut se composer de 2 à 30% de butyrals ou acétals polyvinyliques et de 1 à 10% d'isocyanate par rapport au poids total de la peinture.

Les exemples suivants ne sont pas limitatifs, mais permettent d'illustrer l'invention.

Exemples 1-2-3-4 (cas d'une couche intermédiaire)

On obtient une couche barrière à décapage sélectif et rapide en réalisant une peinture dont la composition par rapport au poids total de la peinture est:

| | Formule 1 réticulée à 20% | Formule 2 réticulée à 40% | Formule 3 réticulée à 50% | Formule 4 réticulé à 100% |
|---|---|---|---|---|
| BASE | | | | |
| MOVITAL B30HH* | 13.5 | 12.6 | 11.7 | 9.7 |
| DIOXYDE DE TITANE | 15.0 | 14.9 | 14.7 | 14.8 |
| LECITHINE DE SOJA | 0.3 | 0.3 | 0.3 | 0.3 |
| ACETATE DE BUTYL | 30.0 | 30.3 | 30.9 | 31.9 |
| XYLENE | 29.7 | 30.4 | 30.9 | 31.8 |
| SOUS TOTAL 1 | 88.5 | 88.5 | 88.5 | 88.5 |
| DURCISSEUR | | | | |
| DESMODUR N100** | 1.5 | 2.3 | 3.1 | 5.0 |
| ACETATE BUTYL | 5.0 | 4.6 | 4.2 | 3.0 |
| XYLENE | 5.0 | 4.6 | 4.2 | 3.5 |
| SOUS TOTAL 2 | 11.5 | 11.5 | 11.5 | 11.5 |
| TOTAL | 100 | 100 | 100 | 100 |

* Mowital B 30 HH : Butyrals polyvinyliques fabriqués par la société HOECHST -

** Desmodur N 100 : Isocyanate aliphatique fabriqué par la société BAYER -

Cette peinture est insérée dans le système suivant :

Subjectile : Alliage 2024 T3 traité par oxydation anodique chromique non colmatée.

Systèmes : Primaire aéronautique 15 à 20 micromètres couche barrière 8 à 20 micromètres
Finition aéronautique 20 à 70 micromètres

Ce système séché 7 jours à 23°C, donne les performances suivantes :

Souplesse selon norme ISO 1519 : Totale sur mandrin 2mm

Adhérence selon norme ISO 2409 : GT O
Résistance en immersion 14 j à l'eau à 23°C : Bonne
Résistance en immersion 14 j au Skydrol à 70°C : Bonne pour formules 2-3-4
Résistance au kérosène en immersion 7 j à 23°C : Bonne

Ces éprouvettes ont ensuite été décapées à l'aide d'un décapant aéronautique exempt de phénol et voici les résultats :

Système avec couche barrière n°1 : décapé en 2 mn sans attaquer la couche barrière.
Système avec couche barrière n°2 : décapé en 4 mn sans attaquer la couche barrière.
Système avec couche barrière n°3 : décapé en 5 mn sans attaquer la couche barrière.
Système avec touche barrière n°4 : décapé en 8 mn sans attaquer la couche barrière.

Exemples 5-6-7-8 (cas d'un primaire anticorrosion)

On obtient un primaire anticorrosion à décapage sélectif rapide dont l'épaisseur après séchage est comprise entre 10 et 30 micromètres sur aluminium traité par oxydation anodique chromique non colmatée et 1 recouvert d'une finition polyuréthanne type aéronautique.

| | Formule 5 Taux rétic. 20% | Formule 6 Taux rétic. 40% | Formule 7 Taux rétic. 50% | Formule 8 Taux rétic. 100% |
|---|---|---|---|---|
| BASE | | | | |
| MOWITAL B30 HH * (société HOECHST) | 11.7 | 11.0 | 10.2 | 8.4 |
| LECITHINE DE SOJA | 0.3 | 0.3 | 0.3 | 0.3 |
| CHROMATE DE STRONTIUM | 10.2 | 10.1 | 10.0 | 9.9 |
| DIOXYDE DE TITANE | 2.0 | 2.0 | 2.0 | 2.0 |
| TALC | 6.8 | 6.8 | 6.7 | 6.7 |
| SILICE | 0.6 | 0.6 | 0.6 | 0.6 |
| ACETATE DE BUTYL | 29.2 | 29.6 | 30.1 | 31.1 |
| XYLENE | 29.2 | 29.6 | 30.1 | 30.1 |
| SOUS TOTAL 1 | 90.0 | 90.0 | 90.0 | 90.0 |
| DURCISSEUR | | | | |
| DESMODUR N100 ** | 1.3 | 2.0 | 2.7 | 4.3 |
| XYLENE | 4.3 | 4.0 | 3.6 | 2.8 |
| ACETATE ISOBUTYL | 4.4 | 4.0 | 3.7 | 2.9 |
| SOUS TOTAL 2 | 10.0 | 10.0 | 10.0 | 10.0 |
| TOTAL | 100.0 | 100.0 | 100.0 | 100.0 |

Le système a séché 7 jours à 23°C et hygrométrie relative = 50% afin que la réticulation du film se fasse, puis a été vieilli pendant 30 jours à 50°C et hygrométrie relative =95%

L'éprouvette est ensuite décapée à l'aide d'un décapant exempt de phénol et les temps obtenus sont les suivants :

Système avec primaire formule 5 : 3 minutes
Système avec primaire formule 6 : 6 minutes
Système avec primaire formule 7 : 7 minutes
Système avec primaire formule 8 : 9 minutes

Les figures montrent des exemples d'applications de l'invention. Les figures 1 a et b montrent un support classique sans mettre en oeuvre l'invention.

Avant décapage, figure 1 a, la plaque à protéger 2 , de préférence métallique et en alliage d'aluminium traité Oxydation anodique chromique, est recouverte d'un primaire polyuréthanne ou époxydique anticorrosion 3 sur laquelle s'applique la couche de finition polyuréthanne 4. Lors du décapage de la couche de finition, le décapant élimine également la couche de primaire et la plaque 2 se retrouve à nu pour recevoir un nouveau

revêtement (fig.1b).

Les figures 2 a et b et 3 a et b montrent un support recouvert d'un système comprenant une couche barrière de la composition selon l'invention.

La couche de finition polyuréthanne 4 repose sur la couche barrière 1 qui, elle-même, adhéré à un primaire polyuréthanne ou époxydique anticorrosion 3 (fig.2a) ou directement à la plaque 2 (fig.3a)

Après décapage, la couche barrière 1 demeure et protège la couche primaire (fig.2b) ou la surface de la plaque (fig.3b) et elle est aussi préparée pour recevoir un nouveau revêtement polyuréthanne de finition sans avoir dégradé le traitement anticorrosion.

Cette peinture peut être appliquée comme couche barrière insérée entre un primaire et une finition.

Dans ce cas, on laisse intact le traitement anticorrosion à l'occasion du décapage ainsi que la couche barrière et il suffit de réappliquer seulement la finition pour reconstituer le système initial. Cette peinture peut également être appliquée comme un primaire anticorrosion ou un apprêt ponçable.

Ainsi cette couche a deux fonctions :

traiter le support et le protéger du décapant. là aussi il suffit de réappliquer la finition aprés le décapage

Cette invention peut servir à protéger des avions, des hélicoptères, ou des véhicules en composite. Cette liste n'est pas limitative.

## Revendications

**1)** Peinture polyuréthanne qui insérée dans un système multicouche joue le rôle de couche barrière qui à la fois accélère et stoppe à sa surface l'action d'un décapant chimique, caractérisé en ce qu'elle comporte comme liant des polymères réticulés par des isocyanates.

**2)** Peinture selon la revendication 1 caractérisée en ce que les polymères sont des acétals ou butyrals polyvinyliques

**3)** Peinture selon l'une des revendications 1 ou 2 caractérisée en ce que les isocyanates sont du type biuret aliphatique ou du type à base de toluène diisocyanate ou du type trimère au isocyanurate ou résines d'uréthanne.

**4)** Peinture selon l'une des revendications 1, 2 ou 3 caractérisée en ce que le taux de réticulation entre les hydroxyles et les isocyanates est situé entre 5 et 150 %.

**5)** Peinture selon l'une des revendications précédentes, caractérisée en ce que la quantité de solvant se situe entre 0 et 90 % par rapport au poids total de la peinture.

**6)** Peinture selon les revendications précédentes caractérisée en ce que la quantité de pigment se situe entre 0 et 80 % par rapport au poids total de la peinture.

**7)** Peinture selon l'une des revendications 1 à 6 caractérisée en ce que le mélange base + durcisseur est composé de 2 à 30 % de Butyrals ou acétals polyvinyliques et de 1 à 10 % d'Isocyanate.

**8)** Peinture selon l'une des revendications 1 à 7 caractérisée en ce que le mélange base + durcisseur est composé de 9,7 à 13,5% de butyrals polyvinyliques et de 1,5 à 5,0% d'isocyanate.

**9)** Peinture selon l'une des revendications 1 à 7 caractérisée en ce que le mélange base + durcisseur est composé de 8,4 à 11,7% de butyrals polyvinyliques et de 1,3 à 4,3% d'isocyanate.

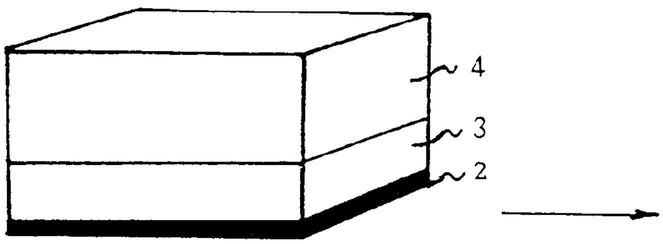


Fig. 1 a

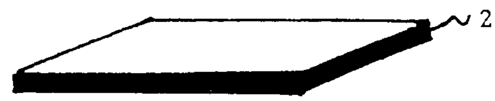


Fig. 1 b

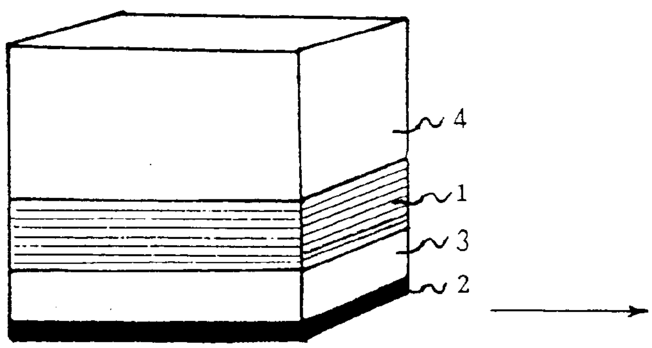


Fig. 2 a

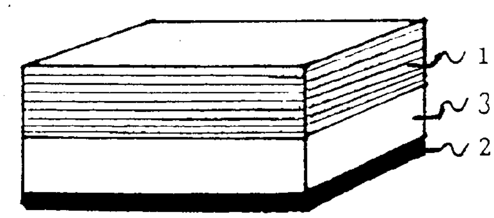


Fig. 2 b

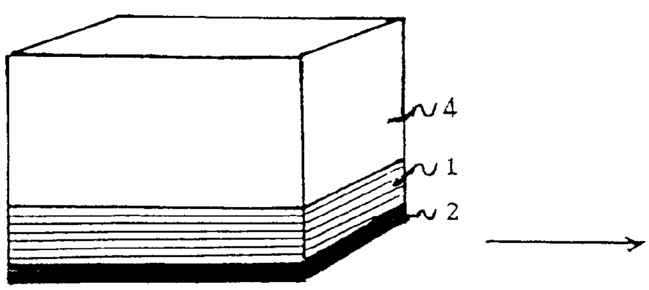


Fig. 3 a

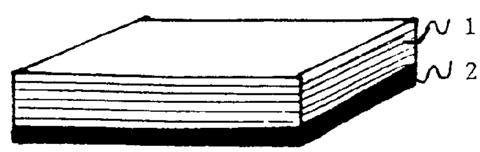


Fig. 3 b

Office européen des brevets

# RAPPORT DE RECHERCHE EUROPEENNE

Numero de la demande

EP 92 42 0133

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | WORLD PATENTS INDEX LATEST<br>Week 8142,<br>Derwent Publications Ltd., London, GB;<br>AN 81-76842D<br>& JP-A-56 112 970 (NIPPON STEEL) 7 Avril 1984<br>* abrégé *<br>--- | 1-3 | C08G18/62<br>B05D7/16<br>C09D5/12<br>C09D129/14<br>C09D175/04 |
| D,X | DE-A-2 528 943 (BASF FARBEN)<br>* revendications 1-5 *<br>* page 2, alinéa 2 *<br>* page 5, alinéa 2 - page 6, alinéa 1 *<br>--- | 1 | |
| D,A | FR-A-2 309 616 (MESSERSCHMITT-BOLKOW-BLOHM)<br>* revendications 1,2 *<br>* page 2, ligne 30 - ligne 39 *<br>--- | 1 | |
| A | FR-A-1 159 513 (D.NITABAH)<br>*résumé,point1*<br>* page 1, colonne de droite, alinéa 2 *<br>* page 2, colonne de gauche, alinéa 5 -alinéa 6 *<br>--- | 1 | DOMAINES TECHNIQUES RECHERCHES (Int. Cl.5 ) |
| A | FR-A-2 244 805 (LOCKHEED AIRCRAFT)<br>* revendication 1 *<br>* page 1, ligne 31 - page 2, ligne 6 *<br>--- | 1 | C08G<br>C09D<br>B05D |
| A | GB-A-755 942 (I.C.I.)<br>* revendications 1,7 *<br>----- | 1 | |

Le présent rapport a été établi pour toutes les revendications

| Lieu de la recherche | Date d'achèvement de la recherche | Examinateur |
|---|---|---|
| LA HAYE | 22 JUILLET 1992 | VAN PUYMBROECK M. A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)